# EUROPÄISCHE PATENTANMELDUNG

(11) **EP 4 521 296 A1**
(43) Veröffentlichungstag der Anmeldung: **12.03.2025**
(21) Anmeldenummer: 23196620.1
(22) Anmeldetag: 11.09.2023
(51) Int. Cl.: G06K 19/07

(54) **SMART LABEL**

(71) Anmelder: etifix GmbH, 72661 Grafenberg (DE)
(72) Erfinder: Bohn, Martin, 72762 Reutlingen (DE)
(74) Vertreter: Christ, Niko

(57) **Zusammenfassung**

Für eine verbesserte Haltbarkeit im Einsatz in einem Mikrowellenofen, bei gleichzeitig guter Auslesbarkeit eines Smart Labels ist es vorgesehen, dass ein flächiges RFID-Inlay bestehend aus einem RFID-Chip und einer Antenne auf einem Metallschirm angebracht sind, welcher aus wenigstens zwei einander überlappenden Folienabschnitten hergestellt ist. Eine Aussparung in den Folienabschnitten wird von der Antenne des RFID-Inlays umschlossen. Wird ein solches Smart Label mit dem Metallschirm voran auf einem Mikrowellengeschirr angebracht und von der Gegenseite ein für Mikrowellenstrahlung undurchlässiges Abschirmelement im Mikrowellenofen vorübergehend darübergelegt, kann ein solches Smart Label im Mikrowellenofen beschädigungsfrei eingesetzt werden und bleibt dennoch außerhalb des Mikrowellenofens und ohne das Abschirmelement auslesbar.

## Beschreibung

Die vorliegende Erfindung betrifft ein Smart Label zur gemeinsamen Verwendung mit einem für Mikrowellenstrahlung undurchdringlichen Abschirmelement in einem Mikrowellenofen, umfassend einen RFID-Chip, eine mit diesem elektrisch verbundene Antenne und einen flächigen Metallschirm, wobei der RFID-Chip mit der Antenne zu einem Inlay zusammengefasst ist, welches auf dem aus mehreren Folienabschnitten hergestellten Metallschirm aufgebracht ist.

Ein solches Smart Label ist bereits aus der EP 4 120 133 A1 des selben Anmelders vorbekannt. Es soll dazu dienen, auf wiederverwendbarem Mikrowellengeschirr eingesetzt zu werden. Hierbei handelt es sich dabei um Verpackungen, in denen bevorzugt verzehrfertige Nahrungsmittel eingekauft werden können, die frisch zubereitet angeboten werden. Die Abgabe erfolgt entweder in normalem Geschirr zum unmittelbaren Verzehr, oder in dem genannten wiederverwendbaren Mikrowellengeschirr, das beispielsweise aus Kunststoff oder Glas hergestellt und damit gut transportierbar ist. Dieses wird allgemein in einem Pfandsystem abgegeben. Das Smart Label dient zur Identifizierung des Geschirrs als zugehörig zum Betrieb und einem damit verknüpften Pfandsystem, sowie gegebenenfalls auch zur Kategorisierung des Geschirrs.

Es ist hierbei vorgesehen, dass das Mikrowellengeschirr im Rahmen eines Pooling-Systems oder Mietservice dem Anbieter zugeordnet ist, welcher dieses mit ihm zusammenarbeitenden Restaurants ausgibt. Hierbei soll nur solches Geschirr zurückgenommen werden, das für die Rücknahme vorgesehen, also in dem System auch ursprünglich einmal ausgegeben worden ist. Dies wird im Stand der Technik allerdings mit Barcodes gelöst, die auf einem mit dem Geschirr verbundenen Etikett aufgedruckt sind. Durch ein entsprechendes Lesegerät, wie zum Beispiel ein Smartphone, ist der Barcode in herkömmlicher Art und Weise auslesbar.

Demgegenüber ist jedoch eine RFID-gestützte Lösung von Vorteil, da in einer solchen die Information über Verwendungszyklen, Identität des jeweiligen Geschirrteils, Anbieter, Materialangaben usw. dezentral verfügbar sind.

Ein RFID-Inlay, bestehend aus einem RFID-Chip und einer Antenne, koppelt zum Auslesen Energie ein, welche von dem Lesegerät, auch hier etwa ein Smartphone, in einem elektrischen Feld bereitgestellt wird und die ausreicht, um den Speicher des RFID-Chips auszulesen und über die Antenne ein Antwortsignal abzustrahlen. Beim Erwärmen in der Mikrowelle, nämlich wenn die verzehrfertigen Nahrungsmittel nochmals aufgewärmt werden sollen, besteht jedoch das Problem, dass auch die Mikrowellenstrahlung in die Antenne eingekoppelt wird und genügend Energie mitbringt, um den RFID-Chip oder die Antenne zu beschädigen oder zu zerstören. Die EP 4 120 133 A1 sieht daher vor, das RFID-Inlay auf Folienabschnitte aufzukleben, die zwischen sich einen Abstand aufweisen, so dass der RFID-Chip und die Antenne einseitig abgeschirmt sind, aber durch die freigelassenen Abstände dennoch kommunizieren können. Von der anderen Seite her ist ein Abschirmelement in Form eines Untersetzers oder einer Manschette erforderlich, welches vorübergehend in dem Mikrowellenofen eine Abschirmung des Smart Labels auch von der anderen Seite her ermöglicht.

Es hat sich gezeigt, dass eine Kommunikation im Hochfrequenzbereich bei 13,56 MHz über die Antenne durch die Abstände zwischen den Folienabschnitten hindurch möglich ist, während die Folienabschnitte ausreichen, um die langwelligere Mikrowellenstrahlung abzuhalten. Allerdings hat sich ebenfalls gezeigt, dass Kanten und Ecken in Mikrowellenofen der Grund dafür sind, dass trotzdem Funkenschläge durch lokale Spannungsspitzen auftreten, welche ebenfalls den RFID-Chip oder die Antenne zerstören können.

Vor diesem Hintergrund liegt der vorliegenden Erfindung die Aufgabe zu Grunde, ein Smart Label zu schaffen, welches sowohl zuverlässig einseitig abgeschirmt ist, als auch eine Kommunikation durch die einseitige Abschirmung hindurch erlaubt, wobei ein Funkenschlag auch bei Nutzung in einem Mikrowellenofen vermieden wird.

Gelöst wird diese Aufgabe durch ein Smart Label gemäß den Merkmalen des unabhängigen Anspruchs 1. Sinnvolle Ausgestaltungen eines solchen Smart Labels können den sich anschließenden abhängigen Ansprüchen entnommen werden.

Vorgesehen ist insoweit ein Smart Label zur gemeinsamen Verwendung mit einem für Mikrowellenstrahlung undurchdringlichen Abschirmelement in einem Mikrowellenofen, umfassend einen RFID-Chip, eine mit diesem elektrisch verbundene Antenne und einen flächigen Metallschirm, wobei der RFID-Chip mit der Antenne zu einem Inlay zusammengefasst ist, welches auf dem aus mehreren Folienabschnitten hergestellten Metallschirm aufgebracht ist. Ein solches Smart Label ist erfindungsgemäß dadurch gekennzeichnet, dass die Folienabschnitte einander abschnittsweise überlappend angeordnet sind und wenigstens eine gemeinsame Aussparung aufweisen, welche von der Antenne umschlossen ist, die hierbei Überlappungen der Folienabschnitte wenigstens zweimal quert.

Es ergibt sich dadurch ein weitaus geringerer Spalt zur Kommunikation, welcher zwischen den einander überlappenden Schichten der Folienabschnitte hindurch verläuft, welcher zu diesen Zwecken aber ausreichend ist. Gegenüber einem Durchdringen der Folienabschnitte mit der Mikrowellenstrahlung ist diese Anordnung hingegen ausreichend geschützt, so dass das RFID-Inlay im Falle einer Kapselung mit dem undurchdringlichen Abschirmelement auch in einem Mikrowellenofen nicht beschädigt oder zerstört werden kann. Die hierbei entstehenden Kanten in dem Metallschirm sind nicht ausreichend, um einen Funkenschlag zu erzeugen und lassen im Ergebnis das von der Antenne des Lese/Schreibgeräts, etwa des Smartphones, erzeugte elektromagnetische Feld durch.

In konkreter Ausgestaltung kann vorgesehen sein, dass die Antenne und die Aussparung kreisrund ausgeführt sind, wobei die Antenne die Aussparung vorzugsweise konzentrisch umschließt. Es hat sich gezeigt, dass die Signalstärke bei kreisrundem Ausschnitt und ebensolcher Antenne größer ist und das Auslesen des RFID-Chips mit einer solchen Anordnung zuverlässiger funktioniert.

Weiter kann als konkreter Wert die Aussparung einen Durchmesser von 5 bis 15 mm aufweisen und der Außendurchmesser des Metallschirms 25 bis 40 mm betragen. Diese Bemaßung zielt hierbei auf die vorgesehene Hauptanwendung im Zusammenhang mit der Verwendung des Smart Labels auf einem mikrowellenfesten Geschirrteil, sei es aus Glas, Kunststoff oder welchem anderen nichtmetallischen Material auch immer hergestellt.

Mit einigem Vorteil können die Folienabschnitte des Metallschirms aus Aluminiumfolie hergestellt sein. Diese kann kostengünstig und ausreichend dünn als Massenware hergestellt werden und lässt sich gut verarbeiten. Zudem kann vorgesehen sein, diese Aluminiumfolie einseitig oder auch beidseitig mit einer Kunststoffschicht zu versehen, um eine Beschädigung des Aluminiums zu vermeiden und elektrisch als Isolator zu wirken. Durch eine zumindest an den einander zugewandten Seiten überlappender Folienabschnitte aufgetragene Kunststoffschicht wird zudem auch der Spalt zwischen den Folienabschnitten etwas verbreitert, durch welchen die hochfrequente Strahlung hindurchtreten können muss. Besonders bevorzugt handelt es sich bei dem eingesetzten Kunststoff um Polyethylenterephtalat (PET).

Ebenfalls kann vorgesehen sein, dass die Folienabschnitte eine Klebeschicht aufweisen, welche zur Anbringung auf einem Untergrund, vorzugsweise einem Mikrowellengeschirrteil, sowie zur gegenseitigen Verklebung im Bereich der Überlappungen, hergerichtet ist. Auch ist es grundsätzlich möglich, die Folienabschnitte noch zunächst auf einem gemeinsamen Träger aufzubringen, welcher seinerseits mit einer Klebeschicht auf dem Mikrowellengeschirr angebracht werden kann. Die Klebeschicht kann in an sich bekannter Art ein Abdeckpapier, insbesondere ein silikonisiertes Trägermaterial aufweisen, welches die Klebeschicht vor dem Einsatz schützt.

In konkreter Ausgestaltung kann weiter vorgesehen sein, dass die Überlappungen eine Überlappungsbreite von 1 bis 5 mm aufweisen. Es hat sich gezeigt, dass durch solche Überlappungen die Kommunikation besonders gut hindurchdringen kann, ohne dass Mikrowellenenergie in die Antenne und den RFID-Chip eingekoppelt wird. Das RFID-Inlay ist auf dem Metallschirm aufgeklebt, wobei eine dem RFID-Chip zugewandte Seite mit einer Klebeschicht beschichtet ist. Auch ist es möglich, das Smart Label schließlich mit einer bedruckten oder unbedruckten Deckschicht, vorzugsweise aus Gussacrylat, zu überziehen, um es gegen mechanische und thermische Einwirkungen möglichst effektiv zu schützen.

Bei dem RFID-Inlay kann es sich bevorzugtermaßen um ein Inlay zur Verwendung im Hochfrequenzbereich um 13,56 MHz handeln. Die Abschirmung hält die Mikrowellenstrahlung im Mikrowellenofen von dem RFID-Inlay ab, lässt jedoch außerhalb des Mikrowellenofens die Kommunikation zu.

Es kann zudem sinnvoll sein, wenn der RFID-Chip einen Schreib-/Lesebereich aufweist. Mit einem solchen Speicherbereich kann auf den Speicher des RFID-Chips eingewirkt werden, so kann etwa vorübergehende Information in einem solchen Bereich vorgehalten werden. Soweit vorgesehen ist, dass der Schreibbereich einen Lösch-Schutz aufweist, können beispielsweise Inhaberdaten eingespeichert werden, die dann in einem späteren Schreibzyklus durch ein Programmiergerät nicht mehr geändert werden können. Eine weitere Möglichkeit kann darin bestehen, dass der RFID-Chip in dem Schreib-/Lesebereich einen Zähler umfasst, welcher durch ein Programmiergerät ausschließlich auslesbar und inkrementierbar ist. Dies sorgt dafür, dass beispielsweise bei einer Nutzung des Mikrowellengeschirrs, mithin einem Verkauf, der Zähler um eins hochgesetzt wird, so dass das Alter und die Nutzungszyklen des Geschirrs erkennbar sind. Ein solches Inlay kann mit einem NFC (Near-Field-Communication)-fähigen Smartphone ausgelesen und/oder programmiert werden.

Die vorstehend beschriebene Erfindung wird im Folgenden anhand eines Ausführungsbeispiels näher erläutert.

Es zeigen
- Figur 1: ein erfindungsgemäßes Smart Label in schematischer Darstellung in einer Draufsicht auf ein Inlay, vor dem Anbringen einer Deckschicht, sowie
- Figur 2: das Smart Label in einer schematischen, Querschnittsdarstellung.

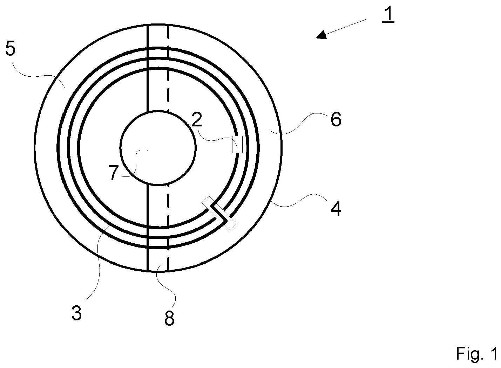

Figur 1 zeigt ein Smart Label 1, welches zur Verwendung an einem Mikrowellengeschirr hergerichtet ist, vor dem Anbringen einer mechanisch und thermisch schützenden Deckschicht 9. Hierzu wird das Smart Label 1 mit einer von dem Betrachter abgewandten Unterseite, an der eine Klebeschicht 10 angebracht ist, auf ein solches Mikrowellengeschirr angebracht. Das Smart Label 1 umfasst hierbei einen RFID-Chip 2 zur Kommunikation mit einem Lese- und/oder Programmiergerät, welches hier nicht weiter von Interesse ist. Diese Kommunikation bewerkstelligt der RFID-Chip 2 unter Zuhilfenahme einer Antenne 3, welche um eine Aussparung 7 herumgelegt ist. RFID-Chip 2 und Antenne 3 sind gemeinsam zu einem Inlay 4 zusammengefasst, wie es für eine Rolle-zu-Rolle-Verarbeitung üblich ist. Die Aussparung 7 ist wenigstens in einem Metallschirm vorgesehen, welcher aus einem ersten Folienabschnitt 5 und einem zweiten Folienabschnitt 6 gebildet ist. Der erste Folienabschnitt 5 wird von dem zweiten Folienabschnitt 6 überlappt, wobei der Überlappungsbereich breit genug ist, dass eine auf den Metallschirm einwirkende Mikrowellenstrahlung nicht durch die Überlappung 8 hindurchdringen kann. Umgekehrt ist der Überlappungsbereich nur so breit, dass von dem RFID-Chip 2 mithilfe der Antenne 3 ausgesandte elektromagnetische Wellen die Überlappung 8 passieren können. Eine Kommunikation durch die Überlappung 8 hindurch ist also möglich, ein Durchdringen der Mikrowellenstrahlung und damit einhergehend eine Beschädigung des RFID-Chips 2 oder der Antenne 3 durch Einkoppeln dieser energiereichen Strahlung oder durch Funkenschlag hingegen nicht.

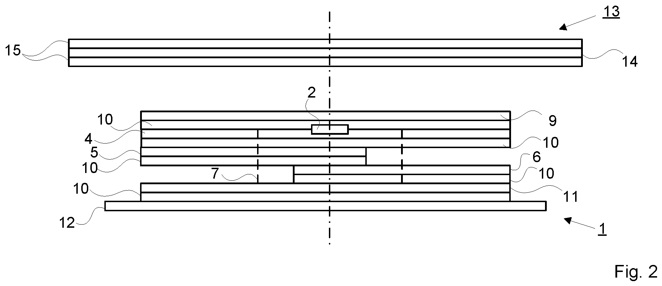

Auf diese Weise kann dem Mikrowellengeschirr ein einseitig geschütztes Inlay mit einem RFID-Chip 2 zugeordnet werden, welcher durch seine Abschirmung hindurch kommunizieren kann. Mit einem zweiten Teil, also einem in Figur 2 gezeigten, für Mikrowellenstrahlung undurchdringlichen Abschirmelement 13, kann eine vollständige Kapselung des RFID-Chips 2 erreicht werden, wenn sowohl das Abschirmelement 13 als auch der Metallschirm größer als die Antenne 3 sind. Ein solches Abschirmelement 13 kann etwa als Untersetzer unter das an seiner Unterseite mit dem Smart Label 1 versehene Geschirrteil gelegt werden, bei einer Anbringung des Smart Labels 1 an einer Seite des Geschirrteils kann das Abschirmelement 13 als Manschette gebildet sein. Bevorzugt ist es wie in Figur 2 dargestellt als Aluminiumschicht 14 ausgebildet, die beiderseits mit einer Papier- und/oder Folienschicht 15 belegt ist. Ebenfalls kann als Abschirmelement 13 ein lösbarer Aufkleber vorgesehen sein, welcher direkt lokal auf dem Smart Label 1 angeklebt wird, bis die Einwirkung von Mikrowellenstrahlen auf das Smart Label 1 aufgehört hat.

Figur 2 zeigt neben dem Abschirmelement 13 weiter eine schematische Schnittdarstellung des Smart Labels 1. Es sind hier zwei Folienabschnitte 5 und 6 vorgesehen, welche jeweils aus Aluminiumfolie hergestellt sind und jeweils beiderseits eine Kunststoffschicht, etwa aus Polyethylenterephtalat, aufweisen.

Zwischen den einzelnen Schichten des Aufbaus sind jeweils Klebeschichten 10 vorgesehen. Während auf den Folienabschnitten 5 und 6 unter Zwischenlage einer Klebeschicht 10 das Inlay 4 aus Antenne 3 und RFID-Chip 2 angeordnet ist, schließt das Smart-Label 1 nach oben hin mit einer Deckschicht 9, vorzugsweise aus Gussacrylat, ab. Nach unten hin ist eine Folienschicht 11 vorgesehen, welche über eine weitere Klebeschicht 10 auf einer silikonisierten Trägerbahn 12 aufgebracht ist, nach dessen Abziehen das Smart Label 1 an einem geeigneten Ort, wie etwa an einem Mikrowellengeschirrteil, platziert werden kann.

Vorstehend beschrieben ist somit ein Smart Label, welches sowohl zuverlässig einseitig abgeschirmt ist, als auch eine Kommunikation durch die einseitige Abschirmung hindurch erlaubt, wobei ein Funkenschlag auch bei Nutzung in einem Mikrowellenofen vermieden wird.

### BEZUGSZEICHENLISTE

- 1: Smart Label
- 2: RFID-Chip
- 3: Antenne
- 4: Inlay
- 5: erster Folienabschnitt
- 6: zweiter Folienabschnitt
- 7: Aussparung
- 8: Überlappung
- 9: Deckschicht
- 10: Klebeschicht
- 11: Folienschicht
- 12: silikonisierte Trägerbahn
- 13: Abschirmelement
- 14: Aluminiumschicht
- 15: Papier- und/oder Folienschicht

## Patentansprüche

1. Smart Label zur gemeinsamen Verwendung mit einem für Mikrowellenstrahlung undurchdringlichen Abschirmelement in einem Mikrowellenofen, umfassend einen RFID-Chip (2), eine mit diesem elektrisch verbundene Antenne (3) und einen flächigen Metallschirm, wobei der RFID-Chip (2) mit der Antenne (3) zu einem Inlay (4) zusammengefasst ist, welches auf dem aus mehreren Folienabschnitten (5, 6) hergestellten Metallschirm aufgebracht ist,
**dadurch gekennzeichnet, dass** die Folienabschnitte (5, 6) einander abschnittsweise überlappend angeordnet sind und wenigstens eine gemeinsame Aussparung (7) aufweisen, welche von der Antenne (3) umschlossen ist, die hierbei Überlappungen (8) der Folienabschnitte (5, 6) wenigstens zweimal quert.

2. Smart Label gemäß Anspruch 1, **dadurch gekennzeichnet, dass** die Antenne (3) und die Aussparung (7) kreisrund ausgeführt sind, wobei die Antenne (3) die Aussparung (7) vorzugsweise konzentrisch umschließt.

3. Smart Label gemäß einem der Ansprüche 1 oder 2, **dadurch gekennzeichnet, dass** die Aussparung (7) einen Durchmesser von 5 bis 15 mm aufweist und der Außendurchmesser des Metallschirms 25 bis 40 mm beträgt.

4. Smart Label gemäß einem der vorhergehenden Ansprüche, **dadurch gekennzeichnet, dass** die Folienabschnitte (5, 6) des Metallschirms aus Aluminiumfolie hergestellt sind.

5. Smart Label gemäß einem der vorhergehenden Ansprüche, **dadurch gekennzeichnet, dass** die Folienabschnitte (5, 6) einseitig oder beidseitig mit einer Kunststoffschicht, vorzugsweise einer Polyethylenterephtalatschicht, versehen sind.

6. Smart Label gemäß einem der vorhergehenden Ansprüche, **dadurch gekennzeichnet, dass** die Folienabschnitte (5, 6) eine Klebeschicht (10) aufweisen, welche zur Anbringung auf einem Untergrund, vorzugsweise einem Mikrowellengeschirrteil, sowie zur gegenseitigen Verklebung im Bereich der Überlappungen (8), hergerichtet ist.

7. Smart Label gemäß einem der vorhergehenden Ansprüche, **dadurch gekennzeichnet, dass** die Überlappungen (8) eine Überlappungsbreite von 1 bis 5 mm aufweisen.

8. Smart Label gemäß einem der vorhergehenden Ansprüche, **dadurch gekennzeichnet, dass** das RFID-Inlay (4) für Frequenzen im Bereich von 13,56 MHz hergerichtet ist.

9. Smart Label gemäß einem der vorhergehenden Ansprüche, **dadurch gekennzeichnet, dass** das RFID-Inlay (4) einen Schreib-/Lesebereich aufweist, der mit einem NFC-fähigen Smartphone programmierbar und auslesbar ist.

10. Smart Label gemäß Anspruch 9, **dadurch gekennzeichnet, dass** der RFID-Chip (2) in dem Schreib-/Lesebereich einen Zähler umfasst, welcher durch ein Programmiergerät ausschließlich auslesbar und inkrementierbar ist.

11. Smart Label gemäß einem vorhergehenden Ansprüche, **dadurch gekennzeichnet, dass** das Smart Label mit einer Deckschicht (9) aus bedrucktem oder unbedrucktem Gussacrylat, überzogen ist.

## Geänderte Patentansprüche

### Geänderte Patentansprüche gemäss Regel 137(2) EPÜ.

1. Smart Label zur Verwendung in einem Mikrowellenofen, umfassend einen RFID-Chip (2), eine mit diesem elektrisch verbundene Antenne (3) und einen flächigen Metallschirm, welcher aus mehreren Folienabschnitten (5, 6) besteht, wobei der RFID-Chip (2) mit der Antenne (3) zu einem Inlay (4) zusammengefasst ist, welches auf dem Metallschirm aufgebracht ist,
**dadurch gekennzeichnet, dass** die Folienabschnitte (5, 6) einander abschnittsweise überlappend angeordnet sind und wenigstens eine gemeinsame Aussparung (7) aufweisen, welche von der Antenne (3) umschlossen ist, wobei die Antenne (3) Überlappungen (8) der Folienabschnitte (5, 6) wenigstens zweimal quert.

2. Smart Label gemäß Anspruch 1, **dadurch gekennzeichnet, dass** die Antenne (3) und die Aussparung (7) kreisrund ausgeführt sind, wobei die Antenne (3) die Aussparung (7) umschließt.

3. Smart Label gemäß einem der Ansprüche 1 oder 2, **dadurch gekennzeichnet, dass** die Aussparung (7) einen Durchmesser von 5 bis 15 mm aufweist und der Außendurchmesser des Metallschirms 25 bis 40 mm beträgt.

4. Smart Label gemäß einem der vorhergehenden Ansprüche, **dadurch gekennzeichnet, dass** die Folienabschnitte (5, 6) des Metallschirms aus Aluminiumfolie hergestellt sind.

5. Smart Label gemäß einem der vorhergehenden Ansprüche, **dadurch gekennzeichnet, dass** die Folienabschnitte (5, 6) einseitig oder beidseitig mit einer Kunststoffschicht versehen sind.

6. Smart Label gemäß einem der vorhergehenden Ansprüche, **dadurch gekennzeichnet, dass** die Folienabschnitte (5, 6) eine Klebeschicht (10) aufweisen, welche zur Anbringung auf einem Untergrund, sowie zur gegenseitigen Verklebung im Bereich der Überlappungen (8), hergerichtet ist.

7. Smart Label gemäß einem der vorhergehenden Ansprüche, **dadurch gekennzeichnet, dass** die Überlappungen (8) eine Überlappungsbreite von 1 bis 5 mm aufweisen.

8. Smart Label gemäß einem der vorhergehenden Ansprüche, **dadurch gekennzeichnet, dass** das RFID-Inlay (4) für Frequenzen des RFID-Chips (2) im Bereich von 13,56 MHz hergerichtet ist.

9. Smart Label gemäß einem der vorhergehenden Ansprüche, **dadurch gekennzeichnet, dass** das RFID-Inlay (4) einen Schreib-/Lesebereich aufweist, der mit einem NFC-fähigen Smartphone programmierbar und auslesbar ist.

10. Smart Label gemäß Anspruch 9, **dadurch gekennzeichnet, dass** der RFID-Chip (2) in dem Schreib-/Lesebereich einen Zähler umfasst, welcher durch ein Programmiergerät ausschließlich auslesbar und inkrementierbar ist.

11. Smart Label gemäß einem vorhergehenden Ansprüche, **dadurch gekennzeichnet, dass** das Smart Label mit einer Deckschicht (9) aus bedrucktem oder unbedrucktem Gussacrylat überzogen ist.

12. System umfassend ein Smart Label gemäß einem der vorhergehenden Ansprüche und ein für Mikrowellenstrahlung undurchdringliches Abschirmelement.
